# DEMANDE DE BREVET EUROPEEN

(11) **EP 4 741 230 A1**
(43) Date de publication de la demande: **13.05.2026**
(21) Numéro de dépôt: 25210182.9
(22) Date de dépôt: 21.10.2025
(51) Int. Cl.: B60R 5/00, B60R 5/02, B60R 21/34, B60R 21/04

(54) **AGENCEMENT COMPRENANT UN SEAU DE RANGEMENT SITUÉ SOUS UN CAPOT AVANT D'UN VÉHICULE AUTOMOBILE**

(30) Priorité: 12.11.2024 FR 2412334
(71) Demandeur: Renault s.a.s, 92100 Boulogne Billancourt (FR)
(72) Inventeur: BUFFETAUD, Julien, 78280 Guyancourt (FR); MEZIERES, Richard, 78280 Guyancourt (FR); PAROLINI, Pascal, 78280 Guyancourt (FR)

(57) **Abrégé**

Agencement comprenant
- un seau de rangement comprenant un fond (11) et une face latérale (12) s'étendant entre le fond et un rebord (13) dit libre du seau, le fond et la face latérale définissant un volume intérieur du seau, et
- un capot exerçant un appui sur le rebord libre (13) pour fermer hermétiquement le seau,

la face latérale comprenant une partie inférieure (121) et une partie supérieure (122) reliées entre elles par une zone de jonction (123),
l'agencement comprenant un dispositif de fixation de la partie inférieure dans une chambre avant du véhicule automobile,
une résistance de la zone de jonction à une force exercée sur le rebord libre étant strictement inférieure à une résistance de la partie supérieure et de la partie inférieure à ladite force exercée, la zone de jonction se rompant lorsque ladite force exercée est supérieure à un seuil limite.

## Description

L'invention porte sur un agencement comprenant un seau de rangement situé sous un capot avant d'un véhicule automobile. L'invention porte en outre sur un véhicule automobile comprenant un tel agencement. L'invention porte en outre sur un procédé de réparation d'un agencement selon l'invention.

La présence d'un seau de rangement dans une chambre avant ou arrière d'un véhicule automobile électrique est connue, le seau de rangement occupant un espace autrefois occupé par un moteur thermique.

Le terme « frunk » est utilisé pour désigner un espace de rangement situé à l'avant d'un véhicule, principalement sur des véhicules automobiles tout-électriques où l'absence de moteur à combustion libère de la place sous le capot avant. Le frunk sert de compartiment supplémentaire pour stocker des objets, en plus du coffre traditionnel situé à l'arrière du véhicule.

Des coffres de rangement situés sous un capot avant d'un véhicule automobile sont connus. Toutefois, les coffres existants présentent des inconvénients.

Le but de l'invention est de définir un agencement comprenant un seau de rangement situé sous un capot avant d'un véhicule automobile remédiant aux inconvénients des agencements comprenant un seau de rangement situé sous un capot avant décrits dans l'art antérieur.

En particulier l'invention permet de réaliser un agencement contenant un seau de rangement respectant les normes de sécurité piétons et dont le couvercle est réalisé par une paroi intérieure du capot.

A cet effet, l'invention porte sur un agencement pour véhicule automobile comprenant :
- un seau de rangement comprenant un fond et au moins une face latérale s'étendant entre le fond du seau et un rebord dit libre du seau, le fond et l'au moins une face latérale définissant ensemble un volume intérieur du seau de rangement, et
- un capot configuré pour fermer une chambre avant du véhicule automobile tout en exerçant un appui sur le rebord libre du seau de rangement de sorte à réaliser une fermeture hermétique du seau de rangement,

l'arrangement étant caractérisé en ce que l'au moins une face latérale du seau de rangement comprend une partie inférieure et une partie supérieure reliées entre elles par une zone de jonction,
en ce qu'il comprend un dispositif de fixation de la partie inférieure du seau de rangement dans une chambre avant du véhicule automobile,
et en ce qu'une résistance de la zone de jonction à une force exercée sur le rebord libre du seau et principalement dirigée vers le fond du seau, est strictement inférieure à une résistance de la partie supérieure et de la partie inférieure à ladite force exercée, de sorte que la zone de jonction se rompt sur toute la circonférence de l'au moins une face lorsque ladite force exercée est supérieure à un seuil limite.

Les dimensions de la partie supérieure et de la partie inférieure de l'au moins une face latérale peuvent être définies de sorte que, après rupture de la zone de jonction et sous l'effet de la force exercée, la partie supérieure coulisse à l'intérieur ou à l'extérieur de la partie inférieure,
la partie supérieure se déplaçant en direction du fond du seau de rangement,
et une hauteur du seau de rangement, mesurée entre le fond du seau et le bord libre de la partie supérieure étant réduite.

Chaque au moins une face latérale peut être réalisée d'un seul tenant.

Une épaisseur de la zone de jonction peut être strictement inférieure à une épaisseur de la partie inférieure de l'au moins une face latérale et à une épaisseur de la partie supérieure de l'au moins une face latérale. La zone de jonction peut être ajourée.

Le dispositif de fixation peut comprendre une structure fixe de la chambre avant et un moyen de fixation du seau de rangement à la structure fixe, le moyen de fixation étant disposé sur la partie inférieure de l'au moins une face latérale, de sorte que la partie inférieure de l'au moins une face latérale peut être fixée à la structure fixe par l'intermédiaire du moyen de fixation.

Le moyen de fixation du seau de rangement à la structure fixe peut se situer à proximité de la zone de jonction du seau de rangement.

La structure fixe peut comprendre :
- une première traverse disposée dans la chambre avant du véhicule automobile et sensiblement orientée selon un axe latéral du véhicule automobile, et
- une deuxième traverse, par exemple faisant partie d'une face avant technique du véhicule automobile, sensiblement parallèle à la première traverse.

L'agencement peut comprendre en outre une pièce de liaison destinée à remplacer la zone de jonction après une rupture de la zone de jonction, la pièce de liaison comprenant
- une première surface destinée à être fixée sur la partie inférieure de l'au moins une face latérale,
- une deuxième surface destinée à être fixée sur la partie supérieure de l'au moins une face latérale, et
- une troisième surface reliant la première et la deuxième surface,
et/ou une épaisseur de la troisième surface peut être strictement inférieure à une épaisseur de la partie inférieure de l'au moins une face latérale et à une épaisseur de la partie supérieure de l'au moins une face latérale et/ou la troisième surface peut être ajourée.

L'invention porte aussi sur un véhicule automobile comprenant un agencement tel que décrit précédemment.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre un repère orthonormé direct attaché au véhicule automobile selon l'invention.
La figure 2 est une première vue en perspective d'un agencement selon l'invention avant qu'un choc piéton survienne.
La figure 3 est une deuxième vue en perspective d'un agencement selon l'invention avant qu'un choc piéton survienne.
La figure 4 est une première vue en coupe longitudinale d'un agencement selon l'invention avant qu'un choc piéton survienne.
La figure 5 est une deuxième vue en coupe longitudinale d'un agencement selon l'invention avant qu'un choc piéton survienne.
La figure 6 est une troisième vue en coupe longitudinale d'un agencement selon l'invention après la survenue d'un choc piéton.
La figure 7 est une première vue en perspective d'un capot d'un agencement selon l'invention.
La figure 8 est une deuxième vue en perspective d'un capot d'un agencement selon l'invention.
La figure 9 est une vue en coupe longitudinale d'un capot d'un agencement selon l'invention.

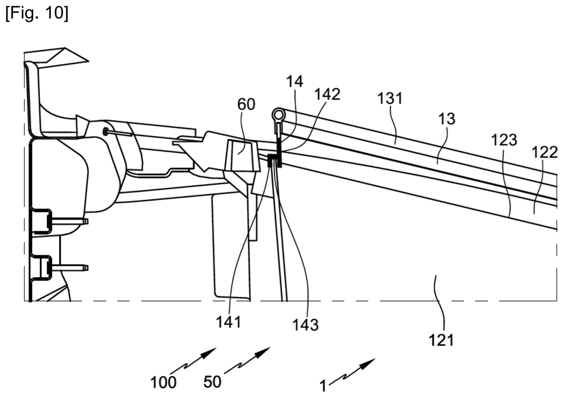

La figure 10 est une vue en coupe longitudinale d'un agencement selon l'invention comprenant une pièce de liaison destinée à remplacer une zone de jonction rompue.

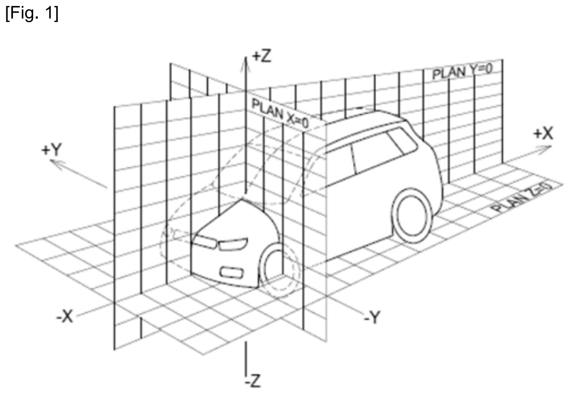

Un mode de réalisation d'un véhicule automobile 100 selon l'invention est décrit ci-après en référence aux figures 1 à 6. Le véhicule automobile 100 est un véhicule automobile de n'importe quel type, notamment un véhicule de tourisme ou un véhicule utilitaire.

Dans un mode de réalisation, le véhicule automobile 100 est un véhicule électrique, notamment un véhicule tout-électrique. Alternativement, le véhicule automobile 100 pourrait être un véhicule hybride.

Pour les besoins de la description, et en référence à la figure 1, on utilise un repère orthonormé direct R0, d'axes X, Y, Z, classiquement utilisé en conception automobile, dans lequel
- l'axe X désigne la direction longitudinale avant-arrière du véhicule, orienté vers l'arrière,
- l'axe Y désigne la direction transversale et est orienté vers la droite du véhicule, et
- l'axe Z désigne la direction verticale, et est orienté vers le haut.

Dans la suite du document, les termes « coupe longitudinale », « coupe transversale » désignent respectivement une coupe selon un plan (X, Z) et une coupe selon un plan (Y, Z).

Le véhicule automobile 100 est équipé d'un agencement 50 selon l'invention, comprenant :
- un seau 1 de rangement comprenant un fond 11 et au moins une face latérale 12 s'étendant entre le fond 11 du seau et un rebord libre 13 du seau 1, le fond 11 et l'au moins une face latérale 12 définissant ensemble un volume intérieur du seau 1 de rangement,
- un capot 2 configuré pour fermer une chambre avant 3 du véhicule automobile tout en exerçant un appui sur le rebord libre 13 du seau 1 de rangement de sorte à réaliser une fermeture hermétique du seau 1 de rangement.

Le rebord libre 13 du seau est avantageusement équipé d'un joint 131 afin de favoriser une fermeture hermétique du seau, notamment par compression du joint 131 sur une surface interne 21 du capot 2.

Dans la suite du document, on décrit un mode de réalisation de l'agencement 50 dans lequel le seau 1 de rangement est disposé dans une chambre avant 3 du véhicule automobile 100, et le capot 2 est un capot avant 2 du véhicule automobile. Le terme « chambre avant » désigne ainsi un espace situé sous un capot avant 2 du véhicule automobile 100.

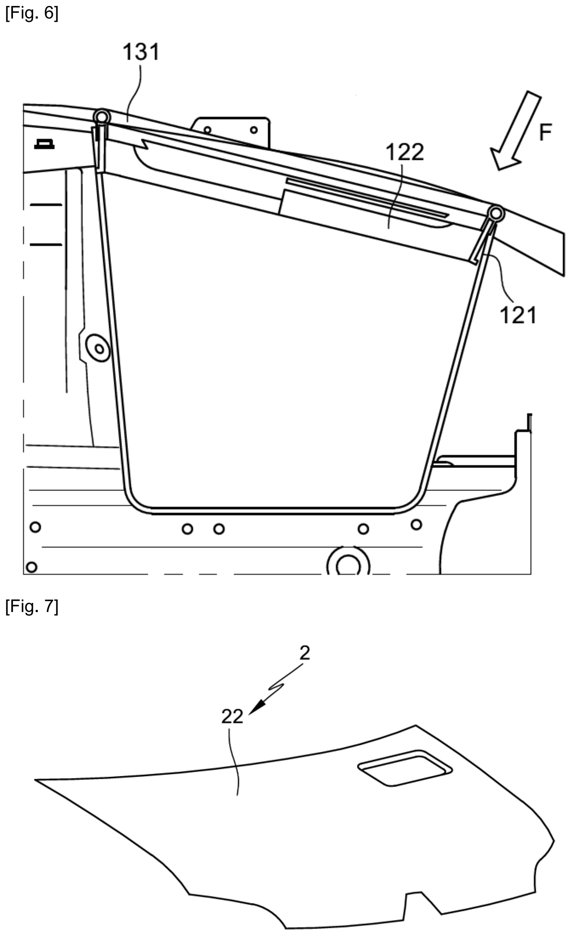

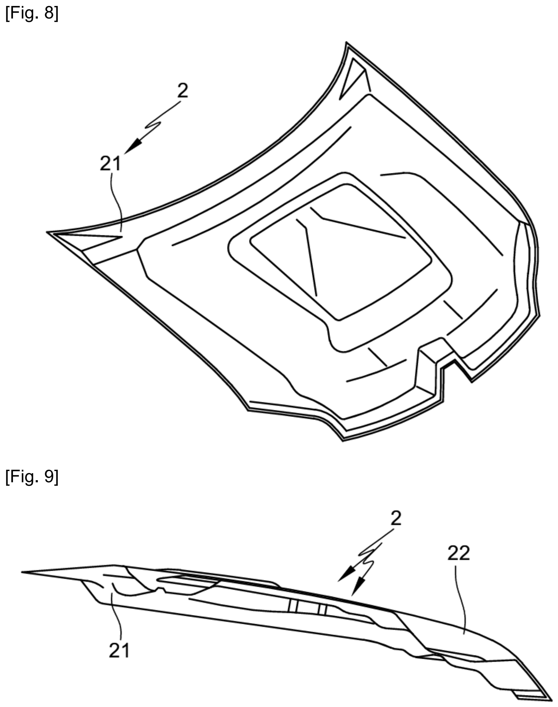

Comme cela est plus spécifiquement illustré par les figures 7 à 9, le capot avant 2 comprend avantageusement une surface interne 21 et une surface externe 22. La surface externe 22 peut être réalisée, par exemple, en métal (acier ou aluminium), ou en plastique. La surface interne 21 peut être réalisée, par exemple, en fibre de verre, ou en matériau composite. La surface interne 21 est avantageusement rainurée selon une forme spécifique apte à augmenter sa raideur.

Dans un autre mode de réalisation de l'invention, on pourrait envisager de fixer le seau 1 de rangement dans une chambre arrière du véhicule automobile.

Dans la suite du document, les termes « seau de rangement », « seau » ou « frunk » désignent un contenant utilisé comme un coffre accessoire du véhicule automobile 100.

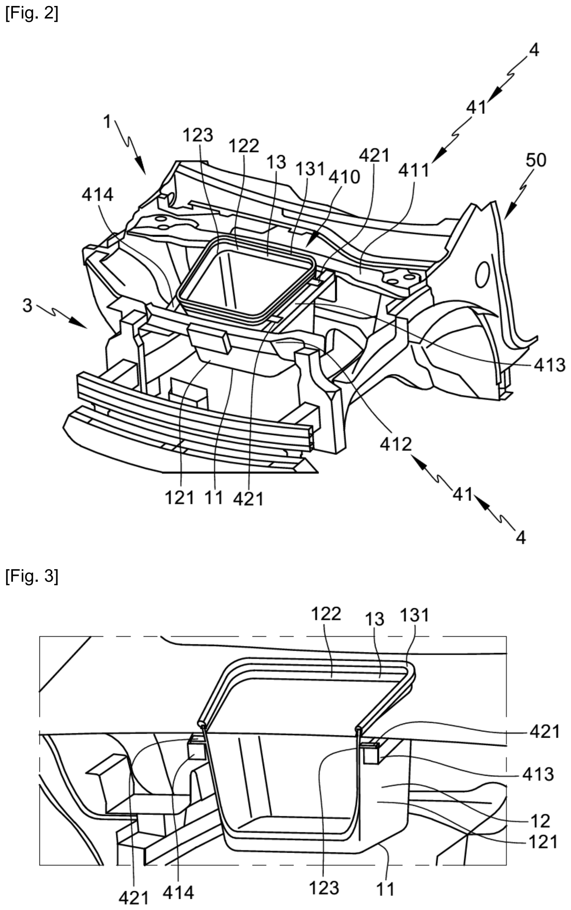

Le frunk 1 de l'agencement 50 selon l'invention est délimité par un fond 11 et au moins une face latérale 12. Dans le mode de réalisation décrit ci-après et illustré par les figures 2 à 5, le frunk 1 est sensiblement de section trapézoïdale. Ainsi, l'au moins une face latérale 12 comprend quatre faces latérales qui définissent ensemble un frunk 1 de section trapézoïdale.

De plus, comme cela est plus spécifiquement illustré par les figures 3 à 6, chaque au moins une face latérale 12 du frunk 1 comprend une partie inférieure 121 et une partie supérieure 122 reliées entre elles par une zone de jonction 123. La présence d'une zone de jonction 123 entre la partie inférieure 121 et la partie supérieure 122 de l'au moins une face latérale 12 permet à la partie supérieure 122 de se détacher de la partie inférieure 121 sous l'effet d'une force donnée, exercée sur le rebord libre 13 du frunk 1, le rebord libre 13 du frunk 1 étant l'extrémité supérieure du frunk 1.

En effet, la résistance de la zone de jonction 123 à une force donnée, exercée sur le rebord libre 13 du frunk 1 et principalement dirigée vers le fond 11 du frunk 1, est strictement inférieure à une résistance de la partie supérieure 122 et à une résistance de la partie inférieure 121 à la force donnée, de sorte que la zone de jonction 123 rompt lorsque la force donnée est supérieure à un seuil limite.

La résistance de la zone de jonction 123 à la force donnée est avantageusement calibrée pour que la zone de jonction 123 cède lors d'un choc piéton.

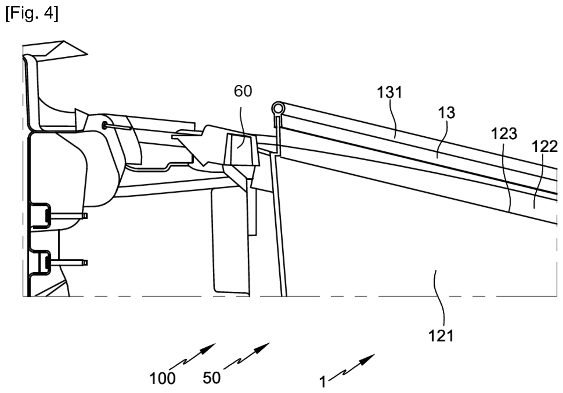

Un mode de réalisation d'une zone de jonction 123 est plus spécifiquement décrit par la figure 4, dans laquelle la jonction 123 est mise en œuvre par une zone de faible épaisseur orientée sensiblement perpendiculairement relativement à la partie inférieure 121 et la partie supérieure 122. Avantageusement, la zone de jonction 123 ne se situe pas dans un même plan que les parties inférieure 121 et supérieure 122. Une telle disposition de la zone de jonction 123 favorise la rupture de la zone de jonction 123, et donc l'effacement de la partie supérieure 122.

Dans un mode de réalisation, chaque au moins une face latérale 12 est réalisée d'un seul tenant, notamment par moulage, par exemple en matériau plastique. Dans un mode de réalisation, une épaisseur de la zone de jonction 123 est strictement inférieure à une épaisseur de la partie inférieure 121 des faces latérales et une épaisseur de la partie supérieure 122 des faces latérales 12.

La partie dite inférieure 121 est reliée au fond 11 du frunk 1 de rangement. De plus, la partie inférieure 121 est fixée à l'au moins une structure de fixation par l'intermédiaire d'un moyen de fixation 42.

Dans un mode de réalisation, le moyen de fixation 42 se situe avantageusement à proximité de la jonction 123 reliant la partie inférieure 121 et la partie supérieure 122 du frunk 1 de rangement.

Par ailleurs, la partie supérieure 122 est reliée uniquement à la zone de jonction. En d'autres termes, la partie supérieure 122 n'est pas directement reliée à la structure fixe 41.

Les figures 2 à 6 décrivent un agencement 50 selon l'invention disposé dans le véhicule automobile 100, dans lequel
- le fond 11 du frunk 1 est de périmètre sensiblement trapézoïdal, la grande base du trapèze étant orientée selon l'axe latéral Y, et
- le fond 11 du frunk 1 s'affine selon la direction opposée à l'axe longitudinal X, la forme trapézoïdale du fond 11 s'adaptant particulièrement à la forme de la chambre avant du véhicule automobile 100, qui s'affine dans la direction opposée à l'axe longitudinal X.

La figure 2 décrit en outre une structure fixe 41 de l'agencement 50 permettant de fixer le frunk 1 dans la chambre avant 3, la structure de fixation comprenant un cadre 410 formé par
- une première traverse 411, sensiblement orientée selon l'axe latéral Y du véhicule automobile,
- une deuxième traverse 412, par exemple faisant partie d'une face avant technique du véhicule automobile, sensiblement orientée selon l'axe latéral Y du véhicule automobile,
- deux pièces rectilignes 413, 414 de forme allongée reliant la première et la deuxième traverse 411, 412, les deux pièces rectilignes 413, 414 étant disposées de part et d'autre d'un espace destiné à recevoir le frunk 1, les deux pièces rectilignes 413, 414 étant en outre disposées de sorte à longer les côtés non parallèles du trapèze formé par le frunk 1.

Dans un mode de réalisation illustré notamment par la figure 2, le moyen de fixation comprend plusieurs pattes de fixation 421, par exemple quatre pattes de fixations 421, disposées sensiblement dans un plan donné. Les pattes 421 sont destinées à reposer sur le cadre 410. Lors du montage du frunk 1 dans la chambre avant 3 du véhicule, la partie inférieure 121 du frunk 1 s'insère dans le cadre 410 jusqu'à ce que les pattes 421 soient en appui sur le cadre 401. Chaque patte comprend avantageusement un trou traversant apte à collaborer avec le cadre 410 pour la fixation du frunk 1 sur le cadre 410, notamment par des boulons.

Alternativement, la structure fixe 41 de l'agencement 50 pourrait être mise en œuvre par une poutre disposée par exemple entre deux longerons, le seau 1 de rangement étant en appui sur la poutre. D'autres modes de réalisation de la structure fixe 41 sont envisageables.

Dans un mode de réalisation, l'agencement 50 comprend en outre une pièce de liaison 14 destinée à remplacer la zone de jonction 13 après une rupture de la zone de jonction 13, la pièce de liaison 14 comprenant
- une première surface 141 destinée à être fixée sur la partie inférieure 121 de l'au moins une face latérale 12,
- une deuxième surface 142 destinée à être fixée sur la partie supérieure 122 de l'au moins une face latérale 12, et
- une troisième surface 143 reliant la première et la deuxième surface 141, 142.

Avantageusement, une épaisseur de la troisième surface 143 est strictement inférieure à une épaisseur de la partie inférieure 121 de l'au moins une face latérale 12 et à une épaisseur de la partie supérieure 122 de l'au moins une face latérale 12. En complément ou alternativement, la troisième surface 143 peut être ajourée.

Finalement, l'agencement 50 selon l'invention, permet de répondre simultanément à deux objectifs
- un premier objectif étant d'installer dans la chambre avant un frunk dont le couvercle est réalisé par un joint périphérique en appui sur une couche interne du capot,
- un deuxième objectif étant permettre à une partie supérieure du frunk de se rétracter lors d'un choc piéton, de sorte que le frunk rétracté se situe entièrement en dessous d'une ligne 60 matérialisant une limite d'affaissement du capot en cas de choc piéton.

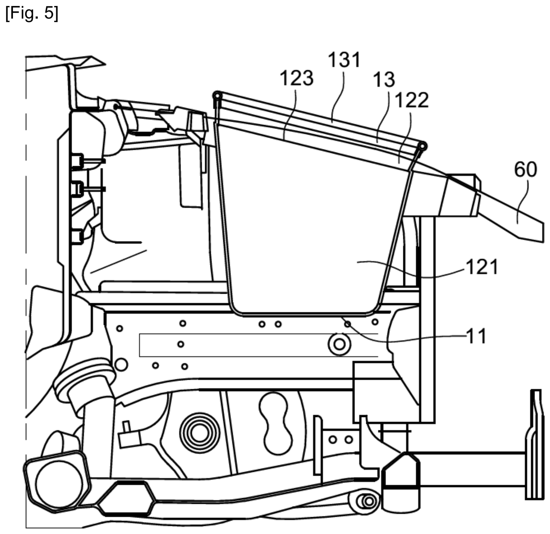

Les figures 5 et 6 illustrent les deux objectifs de l'invention. Dans la figure 5, la partie supérieure du frunk se situe au-dessus de la ligne 60 matérialisant une limite d'affaissement du capot en cas de choc piéton, de sorte que le joint périphérique du frunk soit en appui sur une couche interne du capot (non représentée sur la figure 5).

Dans la figure 6, sous l'effet d'une force F représentant un choc piéton, la zone de jonction 123 a rompu et la partie supérieure 122 du frunk 1 a coulissé à l'intérieur de la partie inférieure 121 du frunk. Le frunk 1 ainsi déformé se situe alors entièrement en dessus de la ligne 60, ce qui signifie que le frunk 1 ainsi déformé ne pénalise pas la sécurité du piéton lors d'un choc piéton.

Ainsi, l'agencement 50 fournit une solution simple permettant de se conformer aux normes de sécurité françaises ou d'autres pays. De plus, l'agencement 50 permet d'obtenir de bonnes notes lors d'évaluation de sécurité, par exemple lors d'évaluations réalisées par l'Euro NCAP.

## Revendications

1. Agencement (50) pour véhicule automobile (100) comprenant
- un seau (1) de rangement comprenant un fond (11) et au moins une face latérale (12) s'étendant entre le fond (11) du seau et un rebord (13) dit libre du seau (1), le fond (11) et l'au moins une face latérale (12) définissant ensemble un volume intérieur du seau (1) de rangement, et
- un capot (2) configuré pour fermer une chambre avant (3) du véhicule automobile tout en exerçant un appui sur le rebord libre (13) du seau (1) de rangement de sorte à réaliser une fermeture hermétique du seau (1) de rangement,
l'arrangement (50) étant **caractérisé en ce que** l'au moins une face latérale (12) du seau (1) de rangement comprend une partie inférieure (121) et une partie supérieure (122) reliées entre elles par une zone de jonction (123),
**en ce qu'**il comprend un dispositif de fixation (4) de la partie inférieure (121) du seau (1) de rangement dans une chambre avant (3) du véhicule automobile (100),
et **en ce qu'**une résistance de la zone de jonction (123) à une force (F) exercée sur le rebord libre (13) du seau (1) et principalement dirigée vers le fond (11) du seau, est strictement inférieure à une résistance de la partie supérieure (122) et de la partie inférieure (121) à ladite force exercée (F), de sorte que la zone de jonction (123) se rompt sur toute la circonférence de l'au moins une face (12) lorsque ladite force exercée (F) est supérieure à un seuil limite.

2. Agencement (50) selon la revendication précédente, **caractérisé en ce que** les dimensions de la partie supérieure (122) et de la partie inférieure (121) de l'au moins une face latérale (12) sont définies de sorte que, après rupture de la zone de jonction (123) et sous l'effet de la force exercée, la partie supérieure (122) coulisse à l'intérieur ou à l'extérieur de la partie inférieure (121),
la partie supérieure (122) se déplaçant en direction du fond du seau (1) de rangement,
et une hauteur du seau (1) de rangement, mesurée entre le fond du seau (11) et le bord libre (13) de la partie supérieure (122) étant réduite.

3. Agencement (50) selon l'une des revendications précédentes, **caractérisé en ce que** chaque au moins une face latérale (12) est réalisée d'un seul tenant.

4. Agencement (50) selon l'une des revendications précédentes, **caractérisé en ce qu'**une épaisseur de la zone de jonction (123) est strictement inférieure à une épaisseur de la partie inférieure (121) de l'au moins une face latérale (12) et à une épaisseur de la partie supérieure (122) de l'au moins une face latérale (12) et/ou **en ce que** la zone de jonction (123) est ajourée.

5. Agencement (50) selon l'une des revendications précédentes, **caractérisé en ce que** le dispositif de fixation (4) comprend une structure fixe (41) de la chambre avant (3) et un moyen de fixation (42) du seau (1) de rangement à la structure fixe (41), le moyen de fixation (42) étant disposé sur la partie inférieure (121) de l'au moins une face latérale (12), de sorte que la partie inférieure (121) de l'au moins une face latérale (12) est fixée à la structure fixe (41) par l'intermédiaire du moyen de fixation (42).

6. Agencement (50) selon la revendication précédente **caractérisé en ce que** le moyen de fixation (42) du seau (1) de rangement à la structure fixe se situe à proximité de la zone de jonction (123) du seau (1) de rangement.

7. Agencement (50) selon l'une des revendications 5 ou 6, **caractérisé en ce que** la structure fixe (41) comprend
- une première traverse (411) disposée dans la chambre avant (3) du véhicule automobile (100) et sensiblement orientée selon un axe latéral (Y) du véhicule automobile (100), et
- une deuxième traverse (412), par exemple faisant partie d'une face avant technique du véhicule automobile, sensiblement parallèle à la première traverse (411).

8. Agencement selon l'une des revendications précédentes, **caractérisé en ce qu'**il comprend en outre une pièce de liaison (14) destinée à remplacer la zone de jonction (13) après une rupture de la zone de jonction (13), la pièce de liaison (14) comprenant
- une première surface (141) destinée à être fixée sur la partie inférieure (121) de l'au moins une face latérale (12),
- une deuxième surface (142) destinée à être fixée sur la partie supérieure (122) de l'au moins une face latérale (12), et
- une troisième surface (143) reliant la première et la deuxième surface (141, 142),
et/ou **en ce qu'**une épaisseur de la troisième surface (143) est strictement inférieure à une épaisseur de la partie inférieure (121) de l'au moins une face latérale (12) et à une épaisseur de la partie supérieure (122) de l'au moins une face latérale (12)
et/ou **en ce que** la troisième surface (143) est ajourée.

9. Véhicule automobile comprenant un agencement (50) selon l'une des revendications précédentes.
